(19)

Europäisches Patentamt

European Patent Office

Office européen des brevets

(11) **EP 3 340 429 B1**

(12) **EUROPEAN PATENT SPECIFICATION**

(45) Date of publication and mention
of the grant of the patent:
**10.02.2021 Bulletin 2021/06**

(51) Int Cl.:
**H02J 1/10** *(2006.01)*       **H02J 3/00** *(2006.01)*
**H02J 9/06** *(2006.01)*

(21) Application number: **16206794.6**

(22) Date of filing: **23.12.2016**

(54) **A SWITCHING ARRANGEMENT FOR SWITCHING BETWEEN TWO INPUTS IN ORDER ENSURE UNINTERRUPTED POWER SUPPLY**

SCHALTANORDNUNG ZUM UMSCHALTEN ZWISCHEN ZWEI EINGÄNGEN UM UNUNTERBROCHEN ENERGIELEISTUNG ZU GEWÄHRLEISTEN

SYSTÈME DE COMMUTATION ENTRE DEUX ENTRÉES POUR GARANTIR L'APPROVISIONEMENT D'ENERGIE ELECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.06.2018 Bulletin 2018/26**

(73) Proprietor: **Huawei Technologies Co., Ltd.
Longgang District
Shenzhen, Guangdong 518129 (CN)**

(72) Inventors:
• **ZHU, Yang
80992 Munich (DE)**
• **KIM, Minho
80992 Munich (DE)**

(74) Representative: **Gill Jennings & Every LLP
MXL
The Broadgate Tower
20 Primrose Street
London EC2A 2ES (GB)**

(56) References cited:
**EP-A1- 2 822 145      CN-A- 104 600 834
US-A- 5 650 974      US-A1- 2013 106 190**

• **RUDRAKSH KAPOOR ET AL: "State of art of power electronics in circuit breaker technology", ENERGY CONVERSION CONGRESS AND EXPOSITION (ECCE), 2012 IEEE, IEEE, 15 September 2012 (2012-09-15), pages 615-622, XP032467571, DOI: 10.1109/ECCE.2012.6342764 ISBN: 978-1-4673-0802-1**

**Description**

FIELD OF THE INVENTION

The present invention relates to the field of electric power switch. More particularly, the present invention relates to a switching arrangement for switching between a main input and a backup input, an information and communication technology (ICT) equipment, a system and a method for controlling the switching arrangement.

BACKGROUND

As information and communication technology (ICT) develops, the ICT equipment integrates more and more functions and the electric power required by the ICT equipment increases day by day. In order to achieve high reliability and high availability for the ICT equipment, not only power supply systems have been used for backup, but also a plurality of power supply unit (PSU) in the ICT equipment have been used for backup, for example, N+N backup configuration, where N is the number of PSUs used for backup.

Electric power may be supplied through alternating current (AC) power supply systems or through DC power supply systems in the form of High voltage Direct current (HVDC) power supply systems or through AC and HVDC hybrid power supply systems for achieving high efficiency and high power density, as the electric power of the ICT equipment increases day by day.

However, due to the use of a conventional electric power switch for switching over between a main input, which may correspond to a main power supply system, and a backup input, which may correspond to a backup power supply system, in the ICT equipment, the probability of generating arcs will be high. This will negatively affect the reliability of the ICT equipment, which will not meet high reliability requirements.

US2013106190A1 discloses a power supply system with an automatic transfer function includes a main-power-loop apparatus, a backup-power-loop apparatus, and a control unit. US5650974A discloses a semiconductor device, which includes a first battery BAT 1, a second battery BAT 2 and switches SW1, SW2, SW3, and SW4.

EP2822145A1 discloses an ICT equipment, which includes a power supply A1 and a power supply AN1 and so on.

SUMMARY

It is therefore an object of the present invention to remedy the above-mentioned disadvantages and to provide an improved switching arrangement for use in an ICT equipment, so as to overcome the arc problem and to meet high reliability requirements for the ICT equipment.

The object is achieved by the features of the independent claims. Further developments of the invention are apparent from the dependent claims.

A first aspect of the present invention provides a switching arrangement for switching between a main input and a backup input, the switching arrangement comprising:

- a first semiconductor switch,
- a first mechanical switch,
- a second mechanical switch, the second mechanical switch being connectable to the main or backup input, and
- a controller being coupled to the first semiconductor switch, the first mechanical switch and the second mechanical switch;
- wherein the first semiconductor switch and the first mechanical switch are connected in parallel, a first common terminal thereof being connected to the second mechanical switch and a second common terminal thereof being connectable to an output coupled to a plurality of power supply units, PSUs; and
- wherein the controller is configured to generate control drive signals for the first semiconductor switch, the first mechanical switch and the second mechanical switch, the control drive signals being configured to:
- switch off the first mechanical switch at zero voltage, and switch the second mechanical switch from the main input to the backup input or from the backup input to the main input at zero current, wherein the second mechanical switch is switched to the backup input or the main input while the first mechanical switch is off;

where the control drive signals are generated in order to:

- switch off the first mechanical switch when the first semiconductor switch is in a conducting state;

- switch off the first semiconductor switch after the first mechanical switch is switched off;

- switch the second mechanical switch from the main input to the backup input or from the backup input to the main input after the first mechanical switch and the first semiconductor switch are switched off;

- switch on the first semiconductor switch when the first mechanical switch is in a non-conducting state; and

- switch on the first mechanical switch when the first semiconductor switch is in a conducting state.

By using a parallel connection of the first semiconductor switch and the first mechanical switch by connecting the second mechanical switch to one common terminal of the parallel connection, it is possible for the controller to control the first mechanical switch to switch over at zero voltage and to control the second mechanical switch to switch over at zero current. In this manner, the arc problem can be avoided, thus the high reliability of the switching arrangement for use in an ICT equipment can be achieved.

This represents a particularly efficient way for generating control drive signals such that the first mechanical switch may be switched off at zero voltage and the second mechanical switch may be switched over at zero current. In particular, by the claimed control drive signals it is possible to switch off the first mechanical switch when a low voltage drop (which is close to zero voltage) across the first semiconductor switch or the first mechanical switch is present. Similarly it is possible to switch over the second mechanical switch when a main power supply loop is non-conducting, wherein the main/backup input, the second mechanical switch, the first mechanical switch and the output may form the main power supply loop.

This represents a particularly efficient way for generating control drive signals such that the first mechanical switch may be switched on at zero voltage (ZVS), and such that the main/backup input, the second mechanical switch, the first mechanical switch and the output may form a main power supply loop which supplies main power for the PSUs. Thus, high reliability and high availability of the switching arrangement for use in an ICT equipment can be achieved.

The switching arrangement further comprises an energy saving circuit and a second semiconductor switch connected in series to the energy saving circuit;

- wherein the energy saving circuit, the first semiconductor switch and the first mechanical switch have the first common terminal connected to the second mechanical switch;
- the second semiconductor switch, the first semiconductor switch and the first mechanical switch have a second common terminal connected to the output configured to be coupled to a plurality of power supply units, PSUs; and
- the energy saving circuit is configured to supply auxiliary power for the PSUs when the second semiconductor switch is in a conducting state, so that the PSUs are able to maintain an output voltage within a specified voltage range for a predefined time interval ($\Delta T_{new\_holdup}$). In particular, the predefined time interval may be longer than the switching time required for switching between the main input and the backup input.

Therefore, by using the energy saving circuit, the PSUs are able to work without interruption even if switching between the main input and the backup input is triggered, for example, in the case a fault is detected on the main input (or the main input line) or the main input is detected to be available. Therefore, the reliability of the switching arrangement for use in an ICT equipment can be further improved.

Optionally, the control drive signals are configured to generate a first switching sequence for the first semiconductor switch and a second switching sequence for the second semiconductor switch, said first switching sequence being the inverse of the second switching sequence.

This represents an efficient way of controlling the second semiconductor switch and the first semiconductor switch to be complimentary, thus it allows the smooth transition from a main power supply loop to an auxiliary power supply loop or vice versa, in other words, either the main power supply loop or the auxiliary power supply loop may supply power for the PSUs to ensure the PSUs working without interrupt, thus the reliability can be further improved.

Optionally, the control drive signals are generated in order to:

- switch off the first mechanical switch when the first semiconductor switch is in a conducting state;
- switch off the first semiconductor switch and switch on the second semiconductor switch at the same time, after the first mechanical switch is switched off;
- switch the second mechanical switch from the main input to the backup input or from the backup input to the main input after the first mechanical switch and the first semiconductor switch are switched off;
- switch off the second semiconductor switch and switch on the first semiconductor switch at the same time, when the first mechanical switch is in a non-conducting state, and
- switch on the first mechanical switch, when the first semiconductor switch is in a conducting state and the second semiconductor switch is in a non-conducting state.

This represents a particularly efficient way for generating control drive signals such that the first mechanical switch may be switched off at zero voltage and the second mechanical switch may be switched over at zero current, and such that the main/backup input, the second mechanical switch, the energy saving circuit, the second semiconductor switch and the output may form an auxiliary power supply loop which supplies auxiliary power for the PSUs to ensure the PSUs working without interrupt, thus the reliability can be further improved.

This represents a particularly efficient way for generating control drive signals such that the first mechanical switch may be switched on at zero voltage, and such that the main/backup input, the second mechanical switch, the first mechanical switch and the output may form a main power supply loop which supplies main power for the PSUs to ensure the PSUs working without interrupt, thus the reliability can be further improved.

A second aspect of the present invention provides an information and communication technology, ICT equipment, comprising:

- a main input or a backup input configured to be coupled to a main or backup power source respectively;
- a switching arrangement described above coupled to the main input or the backup input;
- a plurality of power supply units, PSUs coupled to an output of the switching arrangement; and
- a service board coupled to the PSUs, configured to process services on basis of an output voltage provided by the PSUs.

A third aspect of the present invention provides a system comprising an ICT equipment described above, a main power supply system for supplying the main power source to the ICT equipment, and a backup power supply system for supplying the backup power source to the ICT equipment.

A fourth aspect of the present invention provides a method for controlling a switching arrangement for switching between a main input and a backup input, wherein the switching arrangement comprises a second mechanical switch being connectable to the main or backup input, a first semiconductor switch and a first mechanical switch connected in parallel to the first semiconductor switch, a first common terminal thereof being connected to the second mechanical switch, and the method comprising, the steps of:

- switching off the first mechanical switch at zero voltage, and
- switching the second mechanical switch from the main input to the backup input or from the backup input to the main input at zero current, wherein the second mechanical switch is switched to the backup input or the main input while the first mechanical switch is off; where the steps of switching (701) off the first mechanical switch (313) at zero voltage and switching (703) the second mechanical switch (314) from the main input to the backup input or from the backup input to the main input at zero current, comprise:
- switching off the first mechanical switch when the first semiconductor switch is in a conducting state;
- switching off the first semiconductor switch after the first mechanical switch is switched off; and
- switching the second mechanical switch from the main input to the backup input or from the backup input to the main input after the first mechanical switch and the first semiconductor switch are switched off;

the method further comprising the steps of:

- switching on the first semiconductor switch when the first mechanical switch is in a non-conducting state, and
- switching on the first mechanical switch when the first semiconductor switch is in a conducting state.

The method provides an efficient way for controlling the first mechanical switch to switch over at zero voltage (ZVS) and the second mechanical switch to switch over at zero current (ZCS), thus the arc problem can be avoided and high reliability can be achieved.

This represents a particularly efficient way for controlling a switching arrangement such that the first mechanical switch may be switched off at zero voltage and the second mechanical switch may be switched over at zero current. In this manner, the arc problem can be avoided, thus the high reliability can be achieved.

This represents a particularly efficient way for controlling a switching arrangement such that the first mechanical switch may be switched on at zero voltage, and such that the main/backup input, the second mechanical switch, the first mechanical switch and the output may form a main power supply loop which supplies main power for the PSUs to ensure the PSUs working without interrupt, thus high reliability and high availability can be achieved.

In a first implementation form of the method according to the fourth aspect, the switching arrangement further comprises an energy saving circuit and a second semiconductor switch connected in series to the energy saving circuit, and wherein the energy saving circuit has the first common terminal with the first semiconductor switch and the first mechanical switch and the second semiconductor switch, the first semiconductor switch and the first mechanical switch have a second common terminal; wherein the steps of switching (701) off the first mechanical switch (313) at zero voltage and switching (703) the second mechanical switch (314) from the main input to the backup input or from the backup input to the main input at zero current, comprise:

- switching off the first mechanical switch when the first semiconductor switch is in a conducting state;
- switching off the first semiconductor switch and switching on the second semiconductor switch at the same time, after the first mechanical switch is switched off;
- switching the second mechanical switch from the main input to the backup input or from the backup input to the main input after the first mechanical switch and the first semiconductor switch are switched off;

the method further comprising the steps of:

- switching off the second semiconductor switch and switching on the first semiconductor switch at the same time, when the first mechanical switch is in a non-conducting state, and
- switching on the first mechanical switch, when the first semiconductor switch is in a conducting state and the second semiconductor switch is in a non-conducting state.

This represents a particularly efficient way for controlling a switching arrangement such that the first mechanical switch may be switched off at zero voltage and the second mechanical switch may be switched over at zero current, and such that the main/backup input, the second mechanical switch, the energy saving circuit, the second semiconductor switch and the output may form an auxiliary power supply loop which supplies auxiliary power for the PSUs to ensure the PSUs working without interrupt, thus the reliability can be further improved.

This represents a particularly efficient way for controlling a switching arrangement such that the first mechanical switch may be switched on at zero voltage, and such that the main/backup input, the second mechanical switch, the first mechanical switch and the output may form a main power supply loop which supplies main power for the PSUs to ensure the PSUs working without interrupt, thus the reliability can be further improved.

The ICT equipment, the system and the method of the present invention achieves the same advantages as described above for the switching arrangement for switching between a main input and a backup input.

BRIEF DESCRIPTION OF THE DRAWINGS

The above aspects and implementation forms of the present invention will be explained in the following description of specific embodiments in relation to the enclosed drawings, in which

Figure 1 illustrates an exemplary block diagram of a switching arrangement for switching between a main and backup input according to an embodiment of the present invention;

Figure 2 illustrates an exemplary block diagram of a switching arrangement for switching between a main and backup input according to another embodiment of the present invention;

Figure 3 illustrates an exemplary circuit schematic diagram of a switching arrangement for switching between a main and backup input of Fig. 2;

Figure 4 illustrates another exemplary circuit schematic diagram of a switching arrangement for switching between a main and backup input of Fig. 2;

Figure 5a illustrates a control sequence of Fig. 1 when switching from a main input to a backup input;

Figure 5b illustrates a control sequence of Fig. 1 when switching from a backup input to a main input;

Figure 6a illustrates a control sequence of Fig. 2 when switching from a main input to a backup input;

Figure 6b illustrates a control sequence of Fig. 2 when switching from a backup input to a main input;

Fig. 7 illustrates an exemplary block diagram of an ICT equipment according to an embodiment of the present invention;

Fig. 8 illustrates an exemplary block diagram of a system according to an embodiment of the present invention; and

Fig. 9 illustrates an exemplary block diagram of the system of Fig.8;

Fig. 10 illustrates an exemplary block diagram of the system of Fig.8;

Fig. 11 illustrates an exemplary block diagram of the system of Fig.8;

Fig. 12 illustrates an exemplary block diagram of a method according to an embodiment of the present invention; and

Fig. 13 illustrates another exemplary block diagram of a method according to an embodiment of the present invention.

DETAILED DESCRIPTION

A clear and full description is given below to the solutions according to embodiments of the present disclosure, with reference to the accompanying drawings.

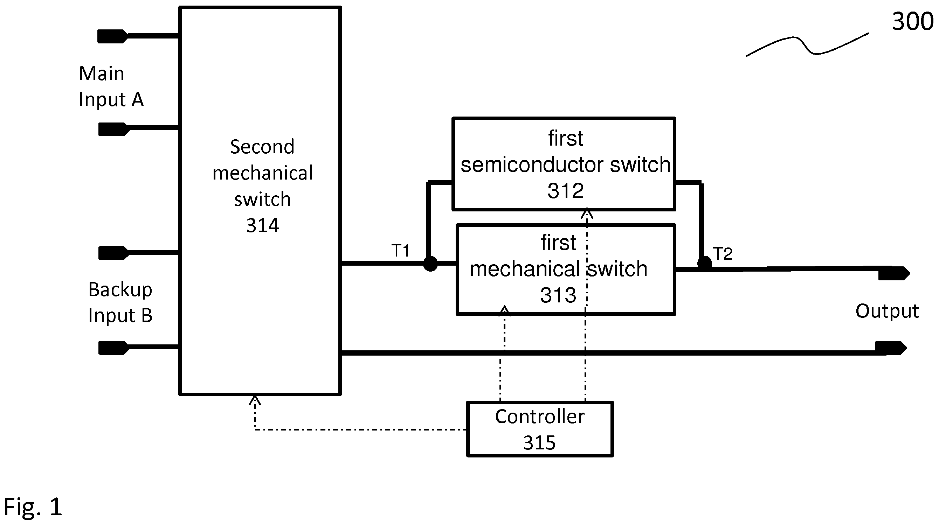

Fig. 1 illustrates an exemplary block diagram of a switching arrangement 300 for switching between a main input A and a backup input B according to an embodiment of the present invention. As shown in FIG. 1, the switching arrangement 300 includes a first semiconductor switch 312, a first mechanical switch 313, a second mechanical switch 314 and a controller 315. The second mechanical switch 314 may be connectable to the main input A or the backup input B. The main input A or the backup input B may be coupled to a main or backup power source respectively. The controller 315 is coupled to the first semiconductor switch 312, the first mechanical switch 313 and the second mechanical switch 314. The first semiconductor switch 312 and the first mechanical switch 313 are connected in parallel, a first common terminal (T1) thereof being connected to the second mechanical switch 314, and a second common terminal (T2) thereof being connected to an output of the switching arrangement 300, in particular, the output may be coupled to a plurality of power supply units (PSUs, also referred to as downstream PSUs, not illustrated in Fig. 1).

When a switching operation from the main input to the backup input is triggered, for example, in the case a fault is detected on the main input (or the main input line), the controller 315 is configured to generate a plurality of control drive signals for the first semiconductor switch 312, the first mechanical switch 313 and the second mechanical switch 314. The control drive signals are configured to switch off the first mechanical switch 313 at zero voltage, and switch the second mechanical switch 314 from the main input to the backup input at zero current.

The second mechanical switch 314 is switched to the backup input B while the first mechanical switch 313 is off, i.e. in a non-conducting state. It can be noted that the expression zero voltage refers to the voltage at a minimum (almost zero or very close to zero) and the zero current refers to the current at a minimum (almost zero or very close to zero) in the embodiments of the present invention. Accordingly, zero voltage switching is in the context of the present invention switching at minimum/almost zero voltage. Similarly, zero current switching corresponds to switching at minimum/almost zero current.

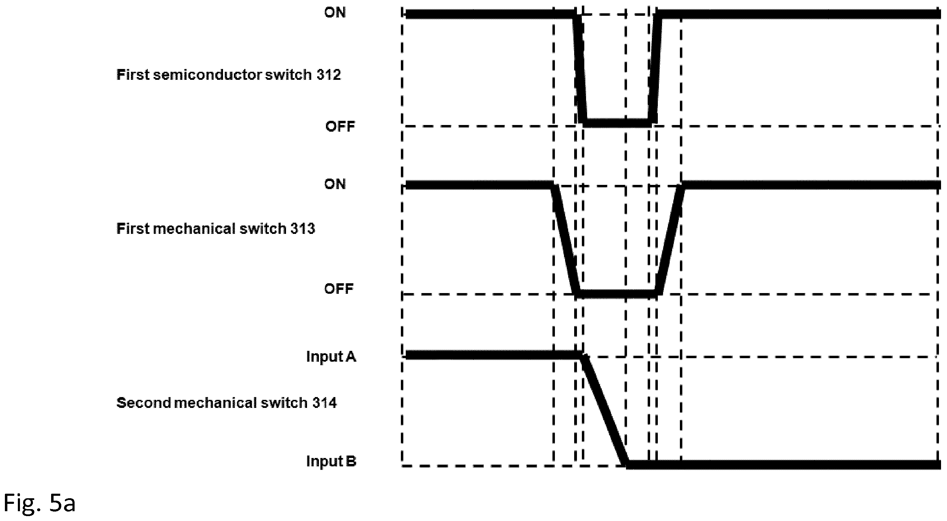

As one example, as shown in Fig. 5a, the control drive signals are configured to:

- switch off the first mechanical switch 313 when the first semiconductor switch 312 is on, i.e., in a conducting state;

- switch off the first semiconductor switch 312 after the first mechanical switch 313 is switched off; and

- switch the second mechanical switch 314 from the main input to the backup input after the first mechanical switch 313 and the first semiconductor switch 312 are switched off.

It can be understood that the on-resistance of the first semiconductor switch 312 is relatively small (for example, $20m\Omega$), when the first semiconductor switch 312 is in a conducting state, the current which flows through the loop "main/backup input-second mechanical switch 314-first semiconductor switch 312-output" is relatively low (for example, 10A), the voltage drop between the first common terminal (T1) and the second common terminal (T2) is relatively low (for example, 0.2V, close to zero), therefore the first mechanical switch 313 may be switched off at zero voltage, and the arc problem caused by the switching of the first mechanical switch 313 can be overcome.

Furthermore, since the first semiconductor switch 312 and the first mechanical switch 313 are switched off, the main power supply loop "main/backup input--second mechanical switch 314--first mechanical switch 313 or first semiconductor switch 312---output" is non-conducting, the second mechanical switch 314 may be switched over at zero current, i.e. without current, thus the arc problem caused by the switching of the second mechanical switch 314 can also be overcome. Thus high reliability can be achieved.

As shown in Fig. 5a, after switching from the main input A to the backup input B, the control drive signals are further configured to:

- switch on the first semiconductor switch 312 when the first mechanical switch 313 is off, i.e. in a non-conducting state; and

- switch on the first mechanical switch 313 when the first semiconductor switch 312 is on, i.e. in a conducting state.

As explained above, firstly, the first mechanical switch 313 may be switched on at zero voltage, thus the arc problem caused by the switching of the first mechanical switch 313 can be overcome. Secondly, the main power supply loop "backup input B--second mechanical switch 314--first mechanical switch 313--output" may be quickly recovered to be conducting and may supply main power for the PSUs to ensure the PSUs working without interrupt, thus the reliability can be further improved.

When a switching operation from the backup input to the main input is triggered, for example, in the case of the main input is detected to be available, the controller 315 is further configured to generate a plurality of control drive signals for the first semiconductor switch 312, the first mechanical switch 313 and the second mechanical switch 314. The control drive signals are configured to switch off the first mechanical switch 313 at zero voltage, and switch the second mechanical switch 314 from the backup input to the main input at zero current. The second mechanical switch 314 is switched to the main input A while the first mechanical switch 313 is off, i.e. in a non-conducting state.

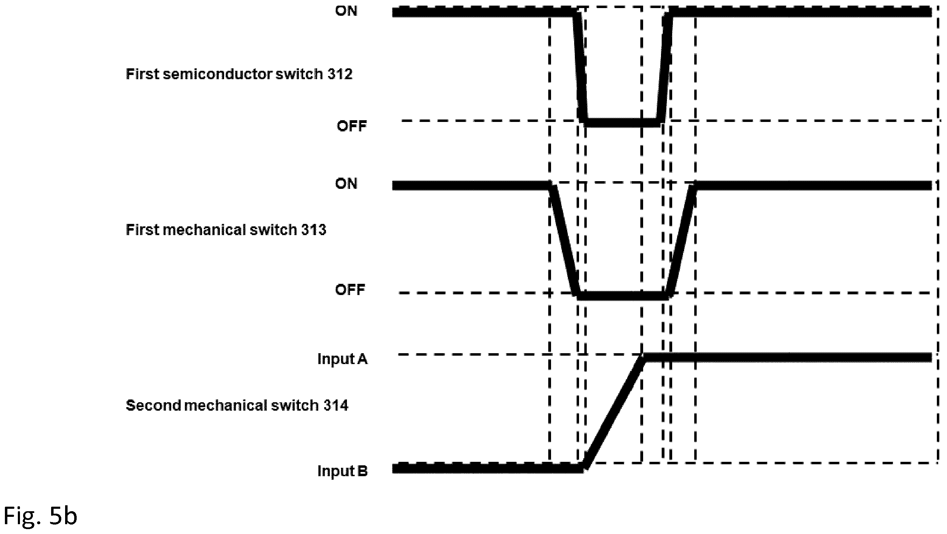

As one example, as shown in Fig. 5b, the control drive signals are configured to:

- switch off the first mechanical switch 313 when the first semiconductor switch 312 is on, i.e. in a conducting state;

- switch off the first semiconductor switch 312 after the first mechanical switch 313 is switched off; and

- switch the second mechanical switch 314 from the backup input B to the main input A after the first mechanical switch 313 and the first semiconductor switch 312 are switched off.

As explained above, in this manner, the first mechanical switch 313 may be switched off at zero voltage and the second mechanical switch 314 may be switched over at zero current, thus the arc problem caused by the switching of the first mechanical switch 313 and the second mechanical switch 314 can be overcome.

As shown in Fig. 5b, after switching from the backup input to the main input, the control drive signals are further configured to:

- switch on the first semiconductor switch 312 when the first mechanical switch 313 is off, i.e. in a non-conducting state; and

- switch on the first mechanical switch 313 when the first semiconductor switch 312 is on, i.e. in a conducting state.

As described above, firstly, the first mechanical switch 313 may be switched on at zero voltage, thus the arc problem caused by the switching of the first mechanical switch 313 can be overcome. Secondly, the main power supply loop "the main input A-- the second mechanical switch 314-- the first mechanical switch 313 -- the output" may be quickly recovered to be conducting and may supply main power for the PSUs to ensure the PSUs working without interrupt, thus the reliability can be further improved.

The above description presents exemplary scenarios in which switching over is performed from the main input to the backup input and vice versa. The embodiments of the present invention, however, are not limited to any particular scenario. Instead, embodiments may be implemented in any type of scenario capable of supporting the switching arrangement presented herein.

In some embodiments, the main input and the backup input may be two AC inputs, two HVDC inputs, or both an AC input and a HVDC input. Preferably, the main input A may be an AC input, and the backup input B may be a HVDC input.

In a further embodiment, the switching arrangement may include a detecting means (not illustrated in Fig.1), configured to detect the main/backup input fault and/or the main/backup input recovery.

As can be seen from Fig. 1, by using a parallel connection of the first semiconductor switch 312 and the first mechanical switch 313 by connecting the second mechanical switch 314 to one common terminal of the parallel connection, it is possible for the controller to control the first mechanical switch 313 to switch over at zero voltage (ZVS) and to control the second mechanical switch 314 to switch over at zero current (ZCS). In this manner, the arc problem can be avoided, thus high reliability of the switching arrangement for use in an ICT equipment can be achieved.

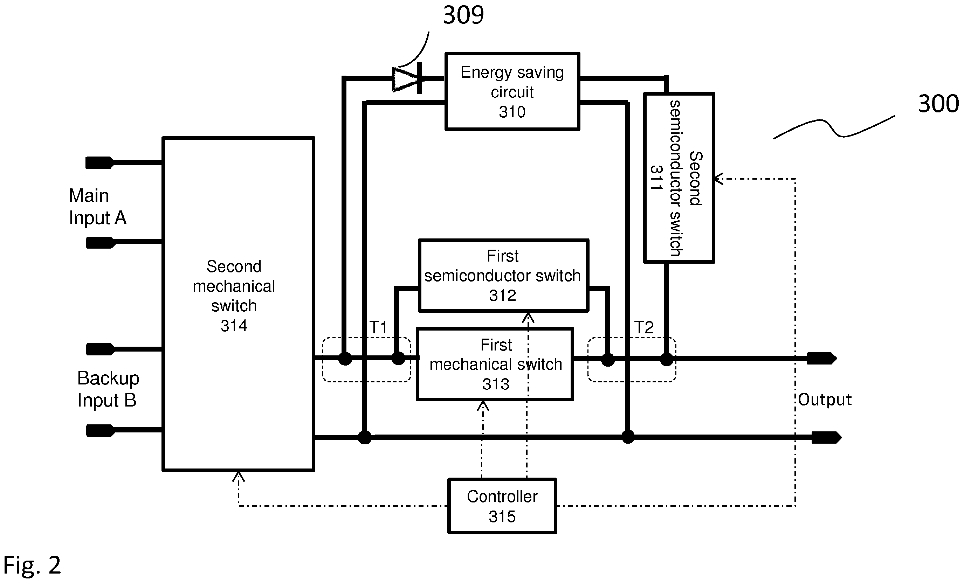

As shown in FIG. 2, according to a further embodiment, the switching arrangement 300 may further include an energy saving circuit 310 and a second semiconductor switch 311 connected in series to the energy saving circuit 310.

The energy saving circuit 310, the first semiconductor switch 312 and the first mechanical switch 313 have the first common terminal (T1) connected to the second mechanical switch 314.

The second semiconductor switch 311, the first semiconductor switch 312 and the first mechanical switch 313 have a second common terminal (T2) connected to an output configured to be coupled to a plurality of power supply units, PSUs 325-331(not illustrated in FIG. 2).

The energy saving circuit 310 is configured to supply auxiliary power for the PSUs 325-331 when the second semiconductor switch 311 is in a conducting state, so that the PSUs 325-331 are able to maintain an output voltage within a specified voltage range for a predefined time interval ($\Delta T_{new\_holdup}$). In particular, the specified voltage range refers to an output voltage range specified by the PSUs. The range may be, for instance +1% to ±5% about the nominal output voltage value of the PSUs. In a specific example this may be 12V ± 5% (11.4V-12.6V). Correspondingly, for example, an input voltage for the PSUs 325-331 may be about 380Vdc or 380Vac or 230Vac. The specific value of the output voltage range depends on the specification of the PSUs used in the embodiments of the present invention. The predefined time interval ($\Delta T_{new\_holdup}$) is longer than the switching time required for switching between the main input and the backup input.

as According to one example, the predefined time interval ($\Delta T_{new\_holdup}$) may be defined by taking into account a scenario, in which switching from the main input to the backup input or vice versa is triggered. In such scenario, the predefined time interval ($\Delta T_{new\_hodup}$) may be defined according to the relationship

$$0 < \Delta T_{switching} \leq \Delta T_{new\_holdup},$$

wherein:

- $\Delta T_{switching}$ is the time required for switching over from the main input to the backup input or vice versa(short for the switching time), and

- $\Delta T_{new\_holdup}$ is the time interval during which the PSUs are able to maintain an output voltage within a specified voltage range when powered by the energy saving circuit 310.

Alternatively, in another example, the predefined time interval ($\Delta T_{new\_holdup}$) may be defined by taking into account a different scenario, in which a fault happens on the main input. In such scenario, the predefined time interval ($\Delta T_{new\_holdup}$) may be defined according to the relationship

$$0 < \Delta T_{fault\_detection} + \Delta T_{switching} \leq \Delta T_{new\_holdup},$$

wherein:

- $\Delta T_{fault\_detection}$ is the time interval between the time at which a fault happens on the main input and the time at which the fault is detected on the main input (or the main input line),

- $\Delta T_{switching}$ is the time required for switching over from the main input to the backup input once the fault is detected on the main input (or the main input line), and

- $\Delta T_{new\_holdup}$ is the time interval during which the PSUs are able to maintain an output voltage within a specified voltage range when powered by the energy saving circuit 310.

In particular, $\Delta T_{switching}$ may be the total time interval obtained by adding the following partial time in-

tervals:

- the time interval $\Delta t1$ for switching off the first mechanical switch 313,

- the time interval $\Delta t2$ for switching off the first semiconductor switch 312,

- the time interval $\Delta t3$ for switching the second mechanical switch 314 from the main input to the backup input or vice versa,

- the time interval $\Delta t4$ for switching on the first semiconductor switch 312, and

- the time interval $\Delta t5$ for switching on the first mechanical switch 313.

In other words, $\Delta T_{switching}$ may be the total time interval between switching off the first mechanical switch 313 and switching on the first mechanical switch 313.

It can be understood that the switching time depends on the characteristic of the switch arrangement 300 and different scenarios in which the switch arrangement 300 is used. Usually, the downstream PSUs have 10ms holdup capacitor. In some scenarios, the switching time may be less than 10ms or more than 10ms. However, even if the switching time may be more than 10ms, the risk of interruption may be avoided (i.e. the PSUs are able to work without interrupt) when powered by the energy saving circuit 310.

Furthermore, as shown in FIG. 2, in order to avoid reverse discharging, the switching arrangement 300 may further include a diode 309. The cathode of the diode 309 is connected to the energy saving circuit 310, and the anode of the diode 309 is connected to the first common terminal (T1).

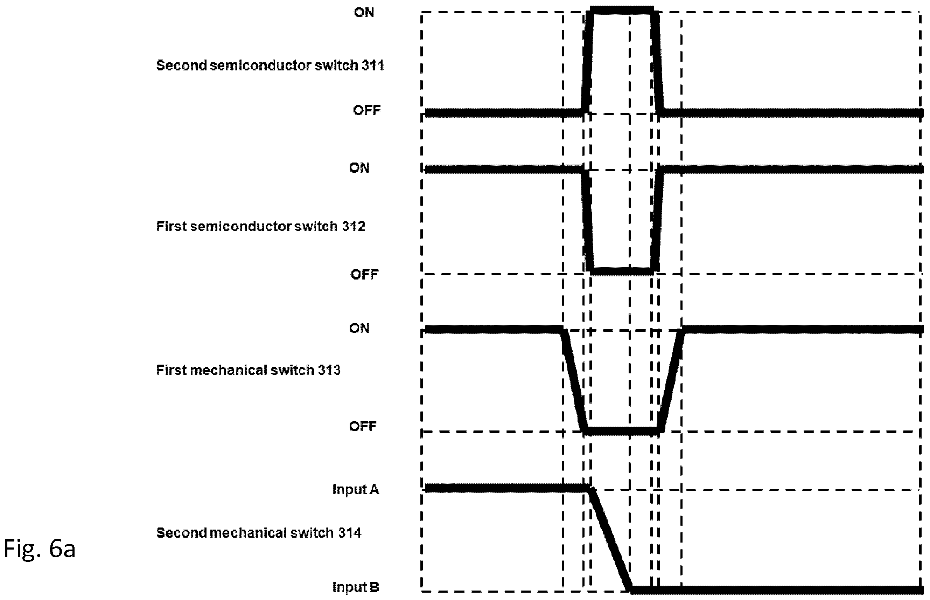

When a switching operation from the main input to the backup input is triggered, for example, when a fault is detected on the main input (or the main input line), as shown in Fig. 2 and Fig. 6a, the controller 315 is configured to generate control drive signals for the second semiconductor switch 311, the first semiconductor switch 312, the first mechanical switch 313 and the second mechanical switch 314. The control drive signals are configured to:

- switch off the first mechanical switch 313 when the first semiconductor switch 312 is on, i.e. in a conducting state;

- switch off the first semiconductor switch 312 and switch on the second semiconductor switch 311 at the same time, after the first mechanical switch 313 is switched off; and

- switch the second mechanical switch 314 from the main input to the backup input after the first mechanical switch 313 and the first semiconductor switch 312 are switched off.

As explained above, by using the control sequence as shown in Fig. 6a, the first mechanical switch 313 may be switched off at zero voltage and the second mechanical switch 314 may be switched over at zero current, thus the arc problem caused by the switching of the first mechanical switch 313 and the second mechanical switch 314 can be overcome. The backup input, and the second mechanical switch 314, the energy saving circuit 310, the second semiconductor switch 311 and the output may form an auxiliary power supply loop which supplies auxiliary power for the PSUs.

As shown in Fig. 6a, after switching from the main input A to the backup input B, the control drive signals are further configured to:

- switch off the second semiconductor switch 311 and switch on the first semiconductor switch 312 at the same time, when the first mechanical switch 313 is off, i.e. in a non-conducting state, and

- switch on the first mechanical switch 313, when the first semiconductor switch 312 is on, i.e. in a conducting state and the second semiconductor switch 311 is off, i.e. in a non-conducting state.

As explained above, firstly, the first mechanical switch 313 may be switched on at zero voltage, thus the arc problem caused by the switching of the first mechanical switch 313 can be overcome. Secondly, the power supply loop "backup input B--second mechanical switch 314--first mechanical switch 313--output" may be recovered quickly to be conducting and may supply main power for the PSUs.

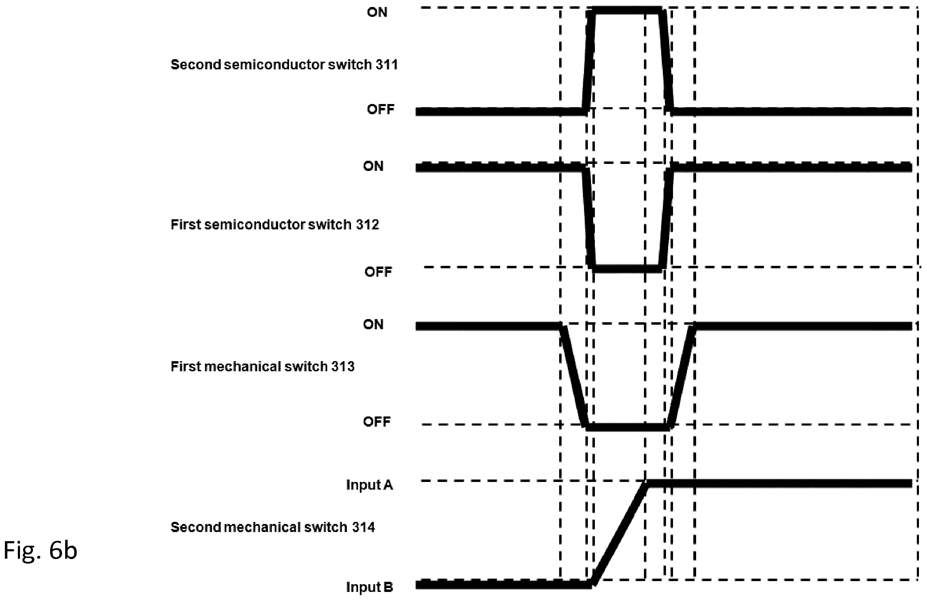

When a switching operation from the backup input to the main input is triggered, for example, the main input is detected to be available, as shown in Fig. 2 and Fig. 6b, the control drive signals are configured to:

- switch off the first mechanical switch 313 when the first semiconductor switch 312 is on, i.e. in a conducting state;

- switch off the first semiconductor switch 312 and switch on the second semiconductor switch 311 at the same time, after the first mechanical switch 313 is switched off; and

- switch the second mechanical switch 314 from the backup input B to the main input A after the first mechanical switch 313 and the first semiconductor switch 312 are switched off.

As explained above, in this manner, the first mechanical switch 313 is switched off at zero voltage and the second mechanical switch 314 is switched over at zero current, thus the arc problem caused by the switching of the first mechanical switch 313 and the second mechanical switch 314 can be overcome. The main/backup input, and the second mechanical switch 314, the energy saving circuit 310, the second semiconductor switch 311 and the output may form an auxiliary power supply loop which supplies auxiliary power for the PSUs.

As shown in Fig. 6b, after switching from the backup input B to the main input A, the control drive signals are further configured to:

- switch off the second semiconductor switch 311 and switch on the first semiconductor switch 312 at the same time, when the first mechanical switch 313 is off, i.e. in a non-conducting state, and

- switch on the first mechanical switch 313, when the first semiconductor switch 312 is on, i.e. in a conducting state and the second semiconductor switch 311 is off, i.e. in a non-conducting state.

As described above, firstly, the first mechanical switch 313 may be switched on at zero voltage, thus the arc problem caused by the switching of the first mechanical switch 313 can be overcome. Secondly, the main power supply loop "main input A--second mechanical switch 314--first mechanical switch 313--output" is quickly recovered to be conducting and may supply main power for the PSUs.

It can be understood that the charge process of the energy saving circuit 310 is performed before or after the switching between two inputs. Correspondingly, the charge loop refers to the loop "main/backup input--second mechanical switch 314--diode 309--energy saving circuit 310". When the energy saving circuit 310 is fully charged, it is in standby. The discharge process of the energy saving circuit 310 is performed during the switching between two inputs as described above. It is noted that during the switching between two inputs, the main/backup input, and the second mechanical switch 314, the energy saving circuit 310, the second semiconductor switch 311 and the output may form an auxiliary power supply loop (also understood as the discharge loop) which supplies auxiliary power for the PSUs, and the current which flows through the auxiliary power supply loop is also relatively low, thus the second mechanical switch 314 is still switched from the main input to the backup input or vice versa at low current, i.e. zero current.

In some embodiments, the energy saving circuit 310 may be implemented by one or more capacitors, however, is not limited to it.

As can be seen from Fig. 2, Fig 6a and Fig 6b, not only the arc problem can be avoided, but also the risk of interruption can be avoided (i.e. the PSUs are able to work without interrupt), thus the reliability of the switching arrangement for use in an ICT equipment can be further improved.

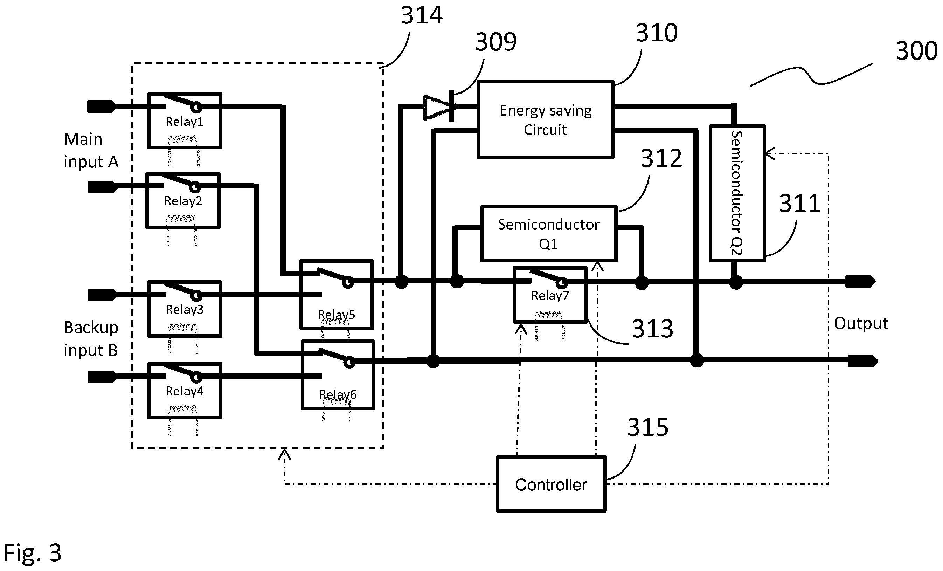

Fig.3 shows a possible implementation of the switching arrangement 300 of Fig. 2. The first mechanical switch 313 and the second mechanical switch 314 are mechanical switches, which can be remotely controlled through the controller as described in the embodiments of the present invention. For example, the first mechanical switch 313 may be a relay. The second mechanical switch 314 may include a plurality of relays. In particular, six mechanical relays can be used for switching over between the main input A and the backup input B. Relay 1 to relay 4 are safety switches, with enough contact gap distance when they are switched off. Usually, relay 1 and relay 2 are switched on when the main input A works normally, relay 3 and relay 4 are switched on when the backup input B works normally. Relay 5 and relay 6 can be switched to switch over between the main input A and the backup input B.

In the following an explicative description of the switching operation is described.

1. Switch over from a main input A to a backup input B:
The relays and semiconductor Q1, Q2 (for example, MOSFETs Q1, Q2) will be controlled to switch on or switch off and the sequences are described as below:

- switch off relay_7, then

- switch off semiconductor Q1 and switch on semiconductor Q2 at the same time, and switch off relay_1 and relay_2 at the same time, then

- switch off relay_5 and relay_6, switch on relay_3 and relay_4 at the same time, then

- switch on semiconductor Q1, and switch on relay_7.

2. Switch over from the backup input B to the main input A:
The relays and semiconductor Q1, Q2 will be controlled to switch on or switch off and the sequences are described as below:

- switch off relay_7, then

- switch off semiconductor Q1 and switch on semiconductor Q2 at the same time, and switch off relay_3 and relay_4 at the same time, then

- switch on relay_1 and relay_2, switch on relay_5 and relay_6 at the same time, then

- switch on semiconductor Q1, and switch on relay_7.

relay_7 is switched off before the semiconductor Q1 is turned off and relay_7 is switched on after the semiconductor Q1 is turned on. Thus relay_7 is always switched at low voltage, i.e. zero voltage switch (ZVS).

Relay_1 to relay_6 are always switched when relay_7 and the semiconductor Q1 are in a non-conducting state, thus these relays may be switched without current, i.e. zero current switch (ZCS).

The semiconductor Q1 and semiconductor Q2 are switched in a complementary manner: the semiconductor Q1 is turned off while the semiconductor Q2 is turned on, and the energy saving circuit 310 discharges energy to the downstream PSUs (not illustrated in Fig. 3), to ensure the downstream PSUs work without interrupt.

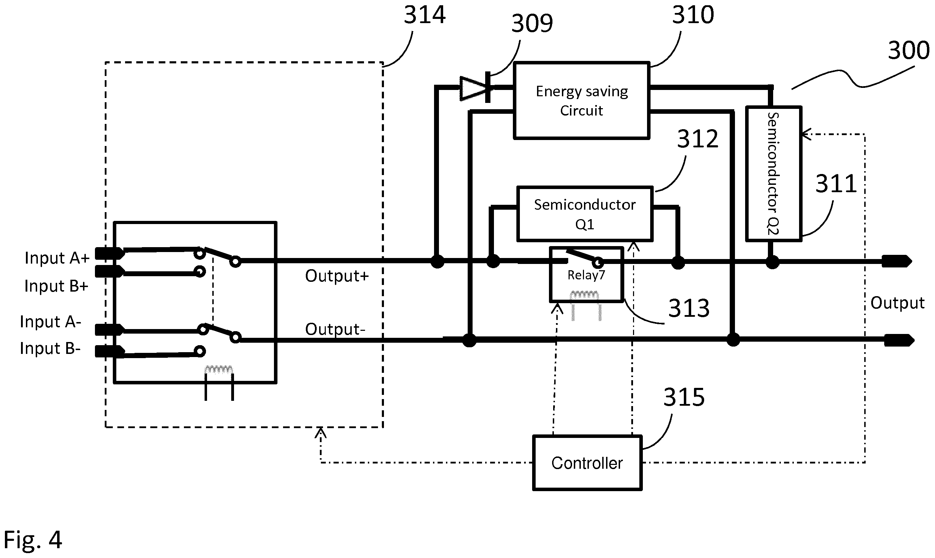

As shown in Fig. 4, a possible implementation of the switching arrangement 300 of Fig. 2 is described. The second mechanical switch 314 may be a double-pole double throw (DPDT) mechanical switch. The double-pole double throw mechanical switch can be used for switch over between the main input A and the backup input B. Usually, this mechanical switch is a safety switch with enough contact gap distance and mechanical interlock required for all contacts.

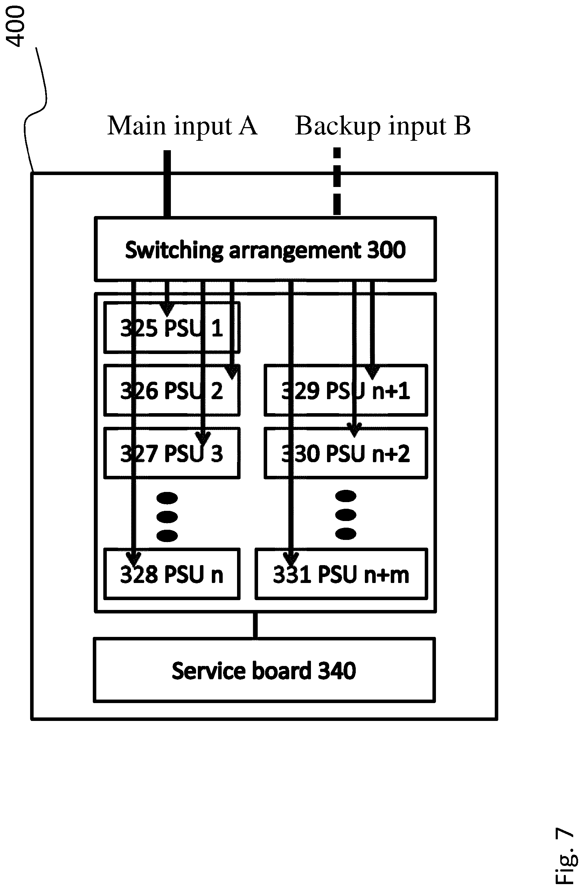

Fig. 7 illustrates an exemplary block diagram of an information and communication technology, ICT equipment 400 according to an embodiment of the present invention. As shown in FIG. 7, the ICT equipment 400 includes:

- a main input A or a backup input B coupled to a main or backup power source respectively;

- a switching arrangement 300 as described above coupled to the main input A or the backup input B;

- a plurality of power supply units (PSUs) 325-331 coupled to an output of the switching arrangement 300; and

- a service board 340 coupled to the PSUs 325-331, configured to process services on basis of an output voltage provided by the PSUs 325-331.

In one example, as shown in Fig. 7, N+M backup PSUs may be used in the ICT equipment 400, it may be less than N+N PSUs ($1 \leq M \leq N$), where M is the number of PSUs used for backup.

It can be understood that, the switching arrangement of this embodiment may be specifically implemented according to the above embodiments; reference may be made to related description in the above embodiment, which is not repeated herein.

As can be seen from Fig. 7, when the switching arrangement is used in the ICT equipment, the arc problem can be avoided, thus high reliability of the ICT equipment can be achieved.

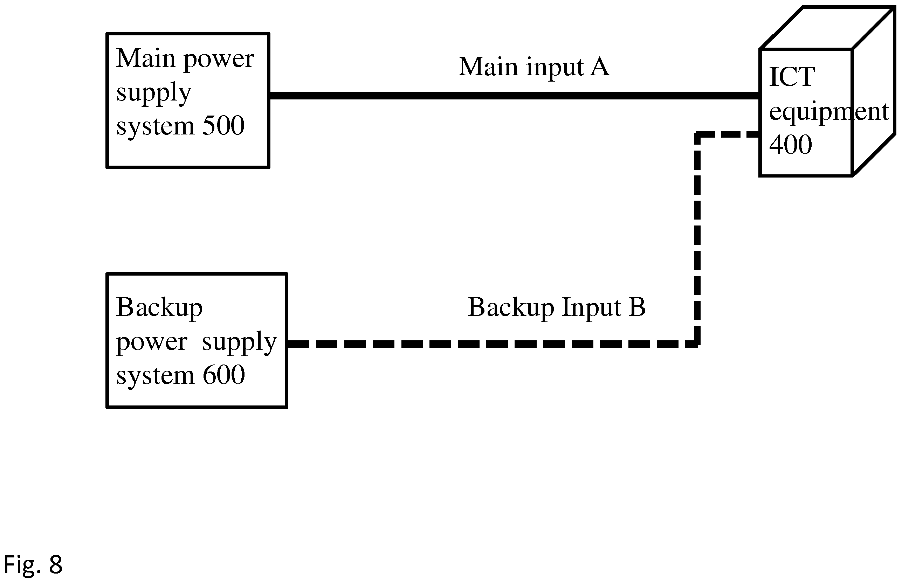

FIG. 8 illustrates an exemplary block diagram of a system according to an embodiment of the present invention. As shown in FIG. 8, the system includes an ICT equipment 400 as described above, a main power supply system 500 for supplying the main power source to the ICT equipment 400, and a backup power supply system 600 for supplying the backup power source to the ICT equipment 400, for example, when the main power source fault is detected, thus high reliability and high availability can be achieved.

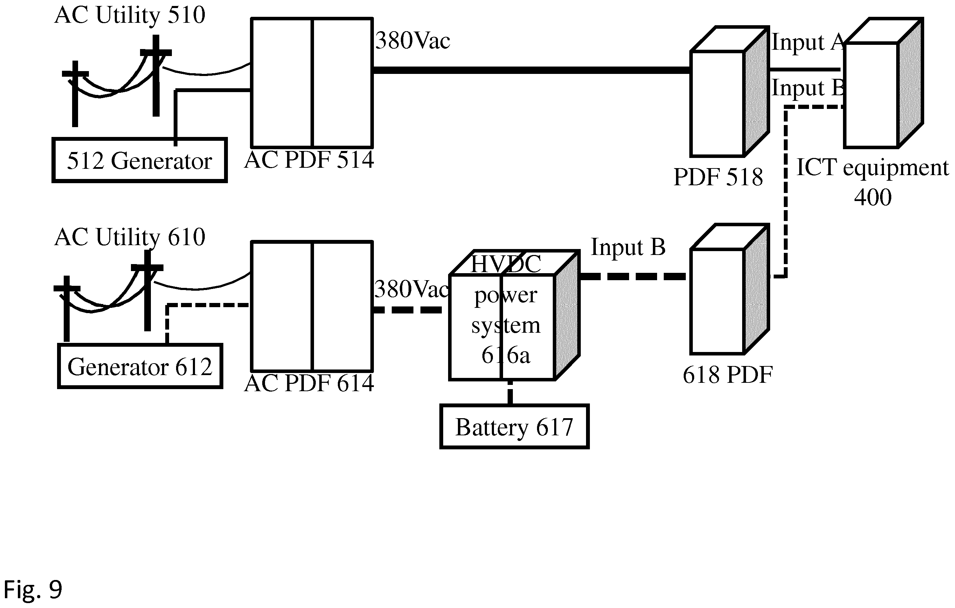

As shown in Fig.9, in one example, the main power supply system 500 may be an AC power supply system including an AC Utility 510, a generator 512, an AC power distribution frame (PDF) 514 and a PDF 518, and the backup power supply system 600 may be a HVDC power supply system including a AC Utility 610, a generator 612, an AC PDF 614, a HVDC power system 616a, a battery 617 and a PDF 618.

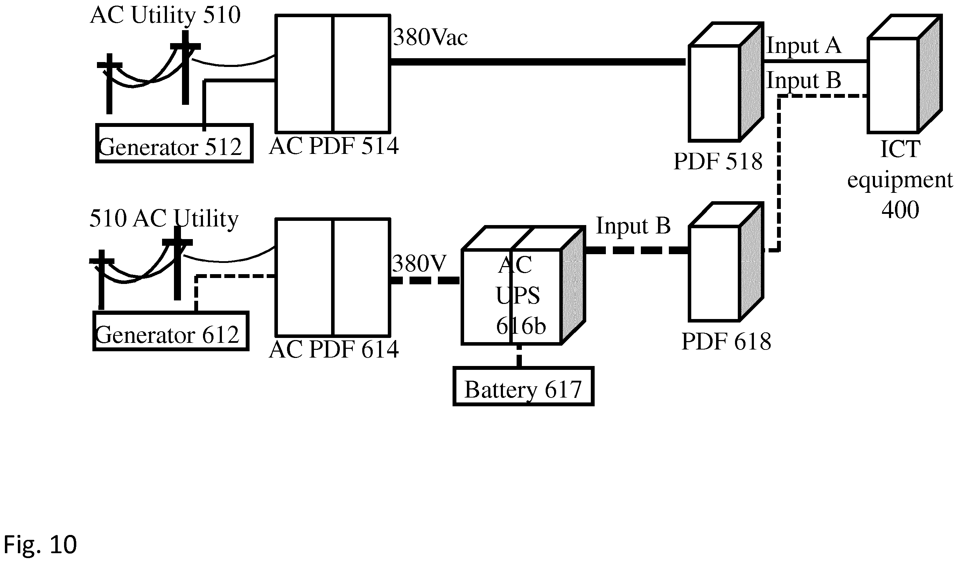

As shown in Fig.10, in another example, the main power supply system 500 may be an AC power supply system including an AC Utility 510, a generator 512, an AC PDF 514 and a PDF 518, and the backup power supply system 600 may also be an AC power supply system including a AC Utility 610, a generator 612, an AC PDF 614, an AC uninterruptible power supply (UPS) 616b, a battery 617 and a PDF 618.

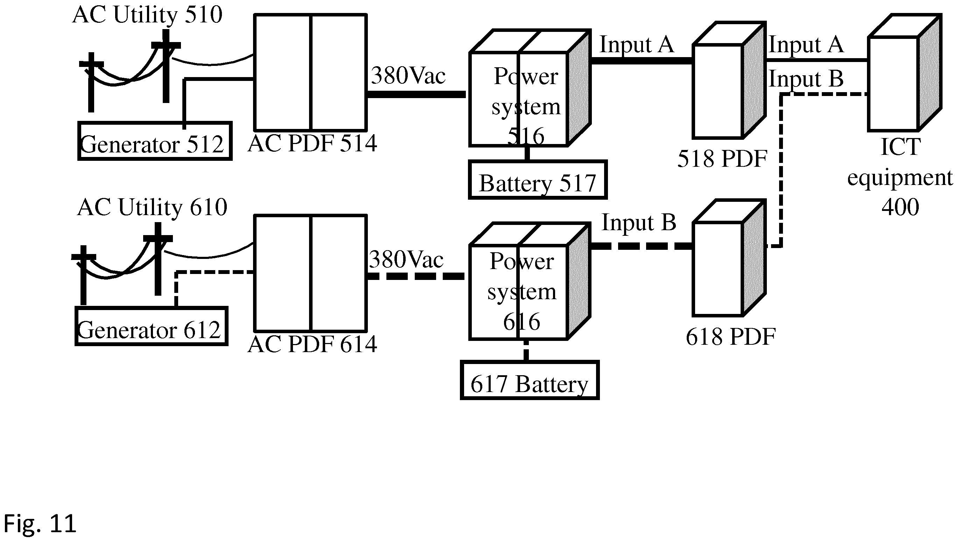

As shown in Fig.11, in further example, the main power supply system 500 may be a HVDC power supply system including an AC Utility 510, a generator 512, an AC PDF 514, a power system 516(could be a HVDC power system), a battery 517 and a PDF 518, and the backup power supply system 600 may also be a HVDC power supply system including a AC Utility 610, a generator 612, an AC PDF 614, a power system 616 (could be a HVDC power system), a battery 617 and a PDF 618. Alternatively, the power system 516 and the power system 616 could be AC UPS.

It can be seen from the above, in addition to high reliability of the system, high flexibility can be achieved because the present invention can be applied to different scenarios.

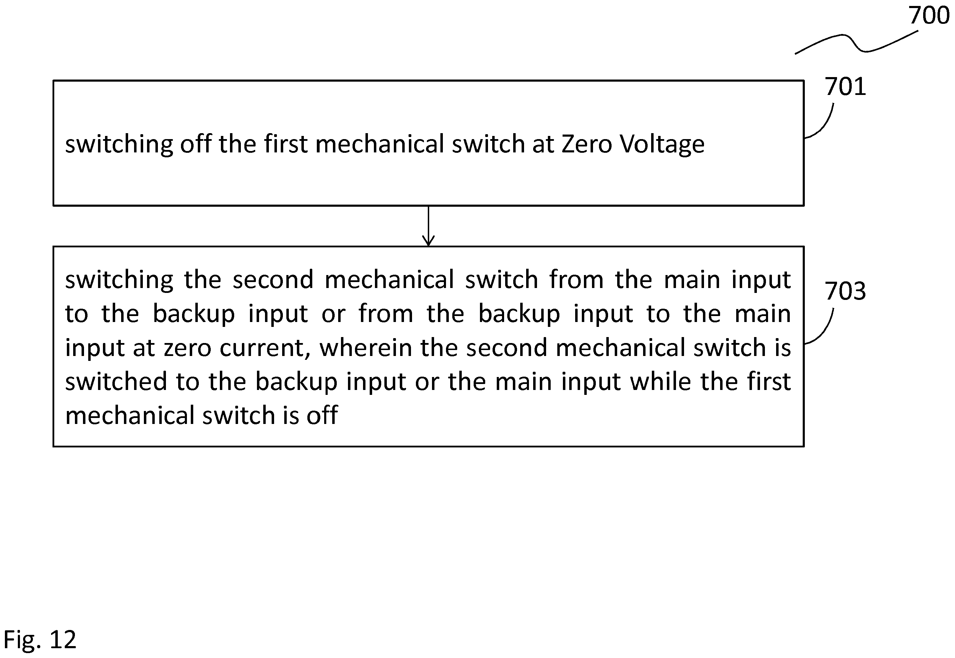

Fig. 12 shows a method 700 for controlling a switching arrangement 300 for switching between a main input and a backup input according to an embodiment of the present invention. The switching arrangement 300 comprises a second mechanical switch 314 being connectable to the main or backup input, a first semiconductor switch 312 and a first mechanical switch 313 connected in parallel, a first common terminal thereof being connected to the second mechanical switch 314, and as shown in FIG. 12, the method 700 may includes:

Step 701, switching off the first mechanical switch 313 at zero voltage, and

Step 703, switching the second mechanical switch 314 from the main input to the backup input or from the backup input to the main input at zero current, wherein the second mechanical switch 314 is switched to the backup input or the main input while the first mechanical switch 313 is off.

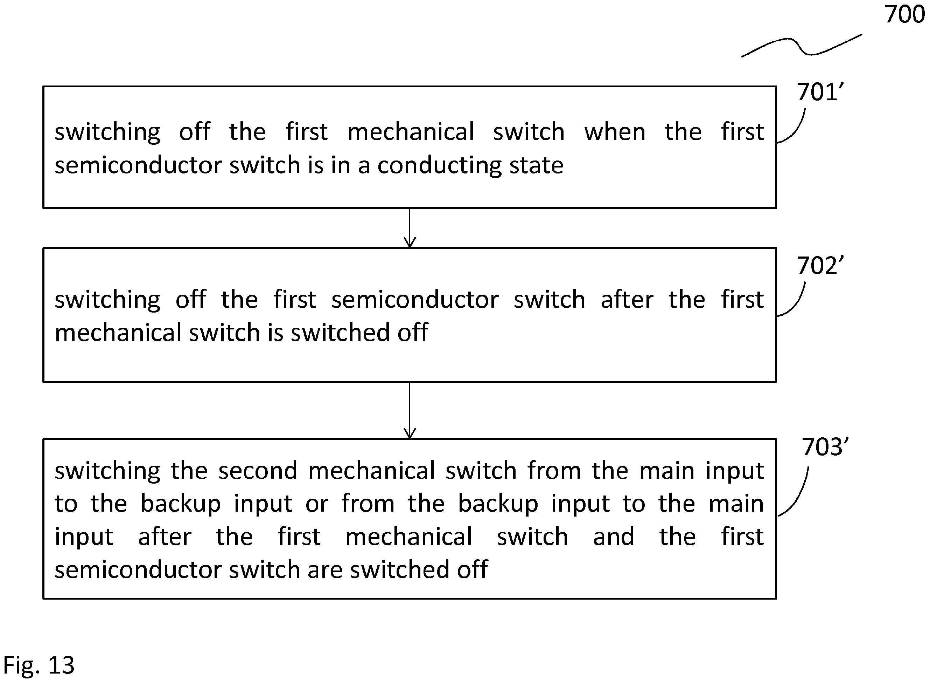

In some embodiments, as shown in FIG. 13, the method 700 may include:

Step 701', switching off the first mechanical switch 313 when the first semiconductor switch 312 is in a conducting state;

Step 702', switching off the first semiconductor switch 312 after the first mechanical switch 313 is switched off; and

Step 703', switching the second mechanical switch 314 from the main input to the backup input or from the backup input to the main input after the first mechanical switch 313 and the first semiconductor switch 312 are switched off.

Furthermore, after switching from the main input A to the backup input B or vice versa, the method 700 may further includes:

- switching on the first semiconductor switch 312 when the first mechanical switch 313 is in a non-conducting state, and
- switching on the first mechanical switch 313 when the first semiconductor switch 312 is in a conducting state.

Preferably, in some embodiments, the switching arrangement further comprises an energy saving circuit 310 and a second semiconductor switch 311 connected in series to the energy saving circuit 310, and wherein the energy saving circuit 310 has the first common terminal with the first semiconductor switch 312 and the first mechanical switch 313 and the second semiconductor switch 311, the first semiconductor switch 312 and the first mechanical switch 313 have a second common terminal; Correspondingly, the method 700 may include the steps of:

- switching off the first mechanical switch 313 when the first semiconductor switch 312 is in a conducting state;
- switching off the first semiconductor switch 312 and switching on the second semiconductor switch 311 at the same time, after the first mechanical switch 313 is switched off; and
- switching the second mechanical switch 314 from the main input to the backup input or from the backup input to the main input after the first mechanical switch 313 and the first semiconductor switch 312 are switched off.

Furthermore, after switching from the main input A to the backup input B or vice versa, the method 700 may further includes:

- switching off the second semiconductor switch 311 and switching on the first semiconductor switch 312 at the same time, when the first mechanical switch 313 is in a non-conducting state, and
- switching on the first mechanical switch 313, when the first semiconductor switch 312 is in a conducting state and the second semiconductor switch 311 is in a non-conducting state. It can be understood that, the method of this embodiment may be specifically implemented according to the above embodiments; reference may be made to the relevant description of other embodiments, which is not repeated herein.

It can seen from the above, the method of the embodiment provides an efficient way for controlling the first mechanical switch 313 to switch over at zero voltage (ZVS) and the second mechanical switch 314 to switch over at zero current (ZCS), thus the arc problem can be avoided and high reliability can be achieved. Furthermore, the method of the embodiment also provides an efficient way of controlling the second semiconductor switch 311 and the first semiconductor switch 312 to be complimentary, i.e. when the first semiconductor switch 312 is switched off, the complimentary second semiconductor switch 311 is switched on and the energy saving circuit 310 may discharge energy to the downstream PSUs to ensure the downstream PSUs working without interrupt, thus the reliability can be further improved. The objectives, technical solutions, and advantages of the present invention are further illustrate above in detail through the exemplary embodiments, but it should be understood that the above descriptions are merely exemplary embodiments of the present invention, but are not intended to limit the present invention. Any modification, or improvement made without departing from the principle of the present invention should fall within the protection scope of the present invention.

**Claims**

1. A switching arrangement (300) for switching between a main input and a backup input, the switching arrangement (300) comprising:

   - a first semiconductor switch (312),
   - a first mechanical switch (313),
   - a second mechanical switch (314), the second mechanical switch (314) being connectable to the main or backup input, and
   - a controller (315) being coupled to the first semiconductor switch (312), the first mechanical switch (313) and the second mechanical switch (314);

     - wherein the first semiconductor switch

(312) and the first mechanical switch (313) are connected in parallel, a first common terminal thereof being connected to the second mechanical switch (314); and

- wherein the controller (315) is configured to generate control drive signals for the first semiconductor switch (312), the first mechanical switch (313) and the second mechanical switch (314), the control drive signals being configured to:
- switch off the first mechanical switch (313) at zero voltage, and switch the second mechanical switch (314) from the main input to the backup input or from the backup input to the main input at zero current, wherein the second mechanical switch (314) is switched to the backup input or the main input while the first mechanical switch (313) is off;

wherein the control drive signals are generated in order to:

- switch off the first mechanical switch (313) when the first semiconductor switch (312) is in a conducting state;
- switch off the first semiconductor switch (312) after the first mechanical switch (313) is switched off;
- switch the second mechanical switch (314) from the main input to the backup input or from the backup input to the main input after the first mechanical switch (313) and the first semiconductor switch (312) are switched off;
- switch on the first semiconductor switch (312) when the first mechanical switch (313) is in a non-conducting state; and
- switch on the first mechanical switch (313) when the first semiconductor switch (312) is in a conducting state; and further

wherein the switching arrangement (300) further comprises an energy saving circuit (310) and a second semiconductor switch (311) connected in series to the energy saving circuit (310);

- wherein the energy saving circuit (310), the first semiconductor switch (312) and the first mechanical switch (313) have the first common terminal connected to the second mechanical switch (314);
- the second semiconductor switch (311), the first semiconductor switch (312) and the first mechanical switch (313) have a second common terminal connected to an output configured to be coupled to a plurality of power supply units, PSUs (325-331); and
- the energy saving circuit (310) is configured to supply auxiliary power for the PSUs (325-331) when the second semiconductor switch (311) is in a conducting state, so that the PSUs (325-331) are able to maintain an output voltage within a specified voltage range for a predefined time interval ($\Delta T_{new\_holdup}$).

2. The switching arrangement (300) according to claim 1, wherein the control drive signals are generated in order to generate a first switching sequence for the first semiconductor switch (312) and a second switching sequence for the second semiconductor switch (311), said first switching sequence being the inverse of the second switching sequence.

3. The switching arrangement (300) according to claim 1 or 2, wherein the control drive signals are generated in order to:

- switch off the first mechanical switch (313) when the first semiconductor switch (312) is in a conducting state;
- switch off the first semiconductor switch (312) and switch on the second semiconductor switch (311) at the same time, after the first mechanical switch (313) is switched off;
- switch the second mechanical switch (314) from the main input to the backup input or from the backup input to the main input after the first mechanical switch (313) and the first semiconductor switch (312) are switched off;
- switch off the second semiconductor switch (311) and switch on the first semiconductor switch (312) at the same time, when the first mechanical switch (313) is in a non-conducting state, and
- switch on the first mechanical switch (313), when the first semiconductor switch (312) is in a conducting state and the second semiconductor switch (311) is in a non-conducting state.

4. An information and communication technology, ICT equipment (400) comprising:

- a main input or a backup input coupled to a main or backup power source respectively;
- a switching arrangement (300) according to anyone of claims 1 to 3 coupled to the main input or the backup input;
- a plurality of power supply units, PSUs (325-331) coupled to an output of the switching arrangement (300); and
- a service board (340) coupled to the PSUs (325-331), configured to process services on basis of an output voltage provided by the PSUs (325-331).

5. A system comprising:

an information and communication technology, ICT equipment (400) comprising:

- a main input or a backup input coupled to a main or backup power source respectively;
- a switching arrangement (300) according to anyone of claims 1 to 3 coupled to the main input or the backup input;
- a plurality of power supply units, PSUs (325-331) coupled to an output of the switching arrangement (300); and
- a service board (340) coupled to the PSUs (325-331), configured to process services on basis of an output voltage provided by the PSUs (325-331);

a main power supply system (500) for supplying the main power source to the ICT equipment (400), and a backup power supply system (600) for supplying the backup power source to the ICT equipment (400).

6. A method (700) for controlling a switching arrangement (300) for switching between a main input and a backup input, wherein the switching arrangement (300) comprises a second mechanical switch (314) being connectable to the main or backup input, a first semiconductor switch (312) and a first mechanical switch (313) connected in parallel, a first common terminal thereof being connected to the second mechanical switch (314), and the method (700) comprising, the steps of:

- switching (701) off the first mechanical switch (313) at zero voltage; and
- switching (703) the second mechanical switch (314) from the main input to the backup input or from the backup input to the main input at zero current, wherein the second mechanical switch (314) is switched to the backup input or the main input while the first mechanical switch (313) is off;

wherein the steps of switching (701) off the first mechanical switch (313) at zero voltage and switching (703) the second mechanical switch (314) from the main input to the backup input or from the backup input to the main input at zero current, comprise:

- switching (701') off the first mechanical switch (313) when the first semiconductor switch (312) is in a conducting state;
- switching (702') off the first semiconductor switch (312) after the first mechanical switch (313) is switched off; and
- switching (703') the second mechanical switch

(314) from the main input to the backup input or from the backup input to the main input after the first mechanical switch (313) and the first semiconductor switch (312) are switched off;

the method (700) further comprising the steps of:

- switching on the first semiconductor switch (312) when the first mechanical switch (313) is in a non-conducting state; and
- switching on the first mechanical switch (313) when the first semiconductor switch (312) is in a conducting state;
- wherein the switching arrangement (300) further comprises an energy saving circuit (310) and a second semiconductor switch (311) connected in series to the energy saving circuit (310),
- wherein the energy saving circuit (310), the first semiconductor switch (312) and the first mechanical switch (313) have the first common terminal connected to the second mechanical switch (314);
- the second semiconductor switch (311), the first semiconductor switch (312) and the first mechanical switch (313) have a second common terminal connected to an output configured to be coupled to a plurality of power supply units, PSUs (325-331); and

wherein the energy saving circuit carries out the steps of supplying auxiliary power for the PSUs (325-331) when the second semiconductor switch (311) is in a conducting state, so that the PSUs (325-331) are able to maintain an output voltage within a specified voltage range for a predefined time interval ($\Delta T_{new\_holdup}$).

7. The method (700) of claim 6, wherein the steps of switching (701) off the first mechanical switch (313) at zero voltage and switching (703) the second mechanical switch (314) from the main input to the backup input or from the backup input to the main input at zero current, comprise:

- switching off the first mechanical switch (313) when the first semiconductor switch (312) is in a conducting state;
- switching off the first semiconductor switch (312) and switching on the second semiconductor switch (311) at the same time, after the first mechanical switch (313) is switched off; and
- switching the second mechanical switch (314) from the main input to the backup input or from the backup input to the main input after the first mechanical switch (313) and the first semiconductor switch (312) are switched off;

the method (700) further comprising the steps of:

- switching off the second semiconductor switch (311) and switching on the first semiconductor switch (312) at the same time, when the first mechanical switch (313) is in a non-conducting state, and
- switching on the first mechanical switch (313), when the first semiconductor switch (312) is in a conducting state and the second semiconductor switch (311) is in a non-conducting state.

**Patentansprüche**

1. Schaltanordnung (300) zum Umschalten zwischen einem Haupteingang und einem Reserveeingang, wobei die Schaltanordnung (300) Folgendes aufweist:

- einen ersten Halbleiterschalter (312),
- einen ersten mechanischen Schalter (313),
- einen zweiten mechanischen Schalter (314), wobei der zweite mechanische Schalter (314) mit dem Haupt- oder dem Reserveeingang verbindbar ist, und
- eine Steuerung (315), die mit dem ersten Halbleiterschalter (312), dem ersten mechanischen Schalter (313) und dem zweiten mechanischen Schalter (314) gekoppelt ist;
- wobei der erste Halbleiterschalter (312) und der erste mechanische Schalter (313) parallel verbunden sind, wobei ein erster gemeinsamer Anschluss davon mit dem zweiten mechanischen Schalter (314) verbunden ist; und
- wobei die Steuerung (315) dazu ausgebildet ist, Steuerungsansteuerungssignale für den ersten Halbleiterschalter (312), den ersten mechanischen Schalter (313) und den zweiten mechanischen Schalter (314) zu erzeugen, wobei die Steuerungsansteuerungssignale ausgebildet sind zum:
- Ausschalten des ersten mechanischen Schalters (313) bei null Spannung und Umschalten des zweiten mechanischen Schalters (314) vom Haupteingang zum Reserveeingang oder vom Reserveeingang zum Haupteingang bei null Stromstärke, wobei der zweite mechanische Schalter (314) auf den Reserveeingang oder den Haupteingang geschaltet wird, während der erste mechanische Schalter (313) ausgeschaltet ist;

wobei die Steuerungsansteuerungssignale erzeugt werden zum:

- Ausschalten des ersten mechanischen Schalters (313), wenn der erste Halbleiterschalter (312) in einem leitenden Zustand ist;
- Ausschalten des ersten Halbleiterschalters (312), nachdem der erste mechanische Schalter (313) ausgeschaltet ist;
- Umschalten des zweiten mechanischen Schalters (314) vom Haupteingang zum Reserveeingang oder vom Reserveeingang zum Haupteingang, nachdem der erste mechanische Schalter (313) und der erste Halbleiterschalter (312) ausgeschaltet sind;
- Einschalten des ersten Halbleiterschalters (312), wenn der erste mechanische Schalter (313) in einem nicht-leitenden Zustand ist; und
- Einschalten des ersten mechanischen Schalters (313), wenn der erste Halbleiterschalter (312) in einem leitenden Zustand ist; und ferner

wobei die Schaltanordnung (300) ferner eine Energiesparschaltung (310) und einen zweiten Halbleiterschalter (311), der in Reihe mit der Energiesparschaltung (310) verbunden ist, aufweist;

- wobei der erste gemeinsame Anschluss der Energiesparschaltung (310), des ersten Halbleiterschalters (312) und des ersten mechanischen Schalters (313) mit dem zweiten mechanischen Schalter (314) verbunden sind;
- wobei ein zweiter gemeinsamer Anschluss des zweiten Halbleiterschalters (311), des ersten Halbleiterschalters (312) und des ersten mechanischen Schalters (313) mit einem Ausgang verbunden ist, der dazu ausgebildet ist, mit mehreren Leistungsversorgungseinheiten, PSUs (325-331), gekoppelt zu werden; und
- wobei die Energiesparschaltung (310) ausgebildet ist zum Zuführen von Zusatzleistung für die PSUs (325-331), wenn der zweite Halbleiterschalter (311) in einem leitenden Zustand ist, sodass die PSUs (325-331) in der Lage sind, eine Ausgangsspannung ein vordefiniertes Zeitintervall ($\Delta T_{neue\_Stütze}$) lang innerhalb eines angegebenen Spannungsbereichs zu halten.

2. Schaltanordnung (300) nach Anspruch 1, wobei die Steuerungsansteuerungssignale erzeugt werden zum Erzeugen einer ersten Schaltsequenz für den ersten Halbleiterschalter (312) und einer zweiten Schaltsequenz für den zweiten Halbleiterschalter (311), wobei die erste Schaltsequenz das Inverse der zweiten Schaltsequenz ist.

3. Schaltanordnung (300) nach Anspruch 1 oder 2, wobei die Steuerungsansteuerungssignale erzeugt werden zum:

- Ausschalten des ersten mechanischen Schalters (313), wenn der erste Halbleiterschalter (312) in einem leitenden Zustand ist;

- Ausschalten des ersten Halbleiterschalters (312) und Einschalten des zweiten Halbleiterschalters (311) zur gleichen Zeit, nachdem der erste mechanische Schalter (313) ausgeschaltet ist;
- Umschalten des zweiten mechanischen Schalters (314) vom Haupteingang zum Reserveeingang oder vom Reserveeingang zum Haupteingang, nachdem der erste mechanische Schalter (313) und der erste Halbleiterschalter (312) ausgeschaltet sind;
- Ausschalten des zweiten Halbleiterschalters (311) und Einschalten des ersten Halbleiterschalters (312) zur gleichen Zeit, wenn der erste mechanische Schalter (313) in einem nicht-leitenden Zustand ist, und
- Einschalten des ersten mechanischen Schalters (313), wenn der erste Halbleiterschalter (312) in einem leitenden Zustand ist und der zweite Halbleiterschalter (311) in einem nichtleitenden Zustand ist.

4. Informations- und Kommunikationstechnologie(ICT)-Ausrüstung (400), die Folgendes aufweist:

- einen Haupteingang oder einen Reserveeingang, gekoppelt mit einer Haupt- bzw. einer Reserveleistungsquelle;
- eine Schaltanordnung (300) nach einem der Ansprüche 1 bis 3, gekoppelt mit dem Haupteingang oder dem Reserveeingang;
- mehrere Leistungsversorgungseinheiten, PSUs (325-331), gekoppelt mit einem Ausgang der Schaltanordnung (300); und
- eine Dienstplatine (340), gekoppelt mit den PSUs (325-331), ausgebildet zum Verarbeiten von Diensten auf Grundlage einer durch die PSUs (325-331) bereitgestellten Ausgangsspannung.

5. System, das Folgendes aufweist:

eine Informations- und Kommunikationstechnologie(ICT)-Ausrüstung (400), die Folgendes aufweist:

- einen Haupteingang oder einen Reserveeingang, gekoppelt mit einer Haupt- bzw. einer Reserveleistungsquelle;
- eine Schaltanordnung (300) nach einem der Ansprüche 1 bis 3, gekoppelt mit dem Haupteingang oder dem Reserveeingang;
- mehrere Leistungsversorgungseinheiten, PSUs (325-331), gekoppelt mit einem Ausgang der Schaltanordnung (300); und
- eine Dienstplatine (340), gekoppelt mit den PSUs (325-331), ausgebildet zum Verarbeiten von Diensten auf Grundlage einer durch die PSUs (325-331) bereitgestellten Ausgangsspannung;

ein Hauptleistungsversorgungssystem (500) zum Bereitstellen der Hauptleistungsquelle für die ICT-Ausrüstung (400), und
ein Reserveleistungsversorgungssystem (600) zum Bereitstellen der Reserveleistungsquelle für die ICT-Ausrüstung (400).

6. Verfahren (700) zum Steuern einer Schaltanordnung (300) zum Umschalten zwischen einem Haupteingang und einem Reserveeingang, wobei die Schaltanordnung (300) einen zweiten mechanischen Schalter (314), der mit dem Haupt- oder Reserveeingang verbindbar ist, einen ersten Halbleiterschalter (312) und einen ersten mechanischen Schalter (313), parallel verbunden, wobei ein erster gemeinsamer Anschluss davon mit dem zweiten mechanischen Schalter (314) verbunden ist, aufweist, und wobei das Verfahren (700) die folgenden Schritte aufweist:

- Ausschalten (701) des ersten mechanischen Schalters (313) bei null Spannung; und
- Umschalten (703) des zweiten mechanischen Schalters (314) vom Haupteingang zum Reserveeingang oder vom Reserveeingang zum Haupteingang bei null Stromstärke, wobei der zweite mechanische Schalter (314) auf den Reserveeingang oder den Haupteingang geschaltet wird, während der erste mechanische Schalter (313) ausgeschaltet ist;

wobei die Schritte des Ausschaltens (701) des ersten mechanischen Schalters (313) bei null Spannung und Umschaltens (703) des zweiten mechanischen Schalters (314) vom Haupteingang zum Reserveeingang oder vom Reserveeingang zum Haupteingang bei null Stromstärke Folgendes aufweisen:

- Ausschalten (701') des ersten mechanischen Schalters (313), wenn der erste Halbleiterschalter (312) in einem leitenden Zustand ist;
- Ausschalten (702') des ersten Halbleiterschalters (312), nachdem der erste mechanische Schalter (313) ausgeschaltet ist; und
- Umschalten (703') des zweiten mechanischen Schalters (314) vom Haupteingang zum Reserveeingang oder vom Reserveeingang zum Haupteingang, nachdem der erste mechanische Schalter (313) und der erste Halbleiterschalter (312) ausgeschaltet sind;

wobei das Verfahren (700) ferner die folgenden Schritte aufweist:

- Einschalten des ersten Halbleiterschalters (312), wenn der erste mechanische Schalter (313) in einem nicht-leitenden Zustand ist; und
- Einschalten des ersten mechanischen Schalters (313), wenn der erste Halbleiterschalter (312) in einem leitenden Zustand ist;
- wobei die Schaltanordnung (300) ferner eine Energiesparschaltung (310) und einen zweiten Halbleiterschalter (311), der in Reihe mit der Energiesparschaltung (310) verbunden ist, aufweist;
- wobei der erste gemeinsame Anschluss der Energiesparschaltung (310), des ersten Halbleiterschalters (312) und des ersten mechanischen Schalters (313) mit dem zweiten mechanischen Schalter (314) verbunden sind;
- wobei ein zweiter gemeinsamer Anschluss des zweiten Halbleiterschalters (311), des ersten Halbleiterschalters (312) und des ersten mechanischen Schalters (313) mit einem Ausgang verbunden ist, der dazu ausgebildet ist, mit mehreren Leistungsversorgungseinheiten, PSUs (325-331), gekoppelt zu werden; und

wobei die Energiesparschaltung die Schritte zum Zuführen von Zusatzleistung für die PSUs (325-331) ausführt, wenn der zweite Halbleiterschalter (311) in einem leitenden Zustand ist, sodass die PSUs (325-331) in der Lage sind, eine Ausgangsspannung ein vordefiniertes Zeitintervall ($\Delta T_{neue\_Stütze}$) lang innerhalb eines angegebenen Spannungsbereichs zu halten.

**7.** Verfahren (700) nach Anspruch 6, wobei die Schritte des Ausschaltens (701) des ersten mechanischen Schalters (313) bei null Spannung und Umschaltens (703) des zweiten mechanischen Schalters (314) vom Haupteingang zum Reserveeingang oder vom Reserveeingang zum Haupteingang bei null Stromstärke Folgendes aufweisen:

- Ausschalten des ersten mechanischen Schalters (313), wenn der erste Halbleiterschalter (312) in einem leitenden Zustand ist;
- Ausschalten des ersten Halbleiterschalters (312) und Einschalten des zweiten Halbleiterschalters (311) zur gleichen Zeit, nachdem der erste mechanische Schalter (313) ausgeschaltet ist; und
- Umschalten des zweiten mechanischen Schalters (314) vom Haupteingang zum Reserveeingang oder vom Reserveeingang zum Haupteingang, nachdem der erste mechanische Schalter (313) und der erste Halbleiterschalter (312) ausgeschaltet sind;

wobei das Verfahren (700) ferner die folgenden Schritte aufweist:

- Ausschalten des zweiten Halbleiterschalters (311) und Einschalten des ersten Halbleiterschalters (312) zur gleichen Zeit, wenn der erste mechanische Schalter (313) in einem nicht-leitenden Zustand ist, und
- Einschalten des ersten mechanischen Schalters (313), wenn der erste Halbleiterschalter (312) in einem leitenden Zustand ist und der zweite Halbleiterschalter (311) in einem nichtleitenden Zustand ist.

**Revendications**

**1.** Système de commutation (300) pour commuter entre une entrée principale et une entrée de secours, le système de commutation (300) comprenant :

- un premier commutateur à semi-conducteurs (312),
- un premier commutateur mécanique (313),
- un second commutateur mécanique (314), le second commutateur mécanique (314) pouvant être connecté à l'entrée principale ou de secours, et
- un dispositif de commande (315) couplé au premier commutateur à semiconducteur (312), au premier commutateur mécanique (313) et au second commutateur mécanique (314) ;
- le premier commutateur à semi-conducteurs (312) et le premier commutateur mécanique (313) étant connectés en parallèle, une première borne commune de ceux-ci étant connectée au second commutateur mécanique (314) ; et
- le dispositif de commande (315) étant configuré pour générer des signaux de commande pour le premier commutateur à semi-conducteurs (312), le premier commutateur mécanique (313) et le second commutateur mécanique (314), les signaux de commande étant configurés pour :
- désactiver le premier commutateur mécanique (313) à une tension nulle, et commuter le second commutateur mécanique (314) de l'entrée principale à l'entrée de secours ou de l'entrée de secours à l'entrée principale à un courant nul, le second commutateur mécanique (314) étant commuté à l'entrée de secours ou à l'entrée principale alors que le premier commutateur mécanique (313) est désactivé ;

les signaux de commande étant générés afin de :

- désactiver le premier commutateur mécanique (313) lorsque le premier commutateur à semiconducteurs (312) est dans un état conducteur ;
- désactiver le premier commutateur à semiconducteurs (312) après que le premier commutateur mécanique (313) a été désactivé ;

- commuter le second commutateur mécanique (314) de l'entrée principale à l'entrée de secours ou de l'entrée de secours à l'entrée principale après que le premier commutateur mécanique (313) et le premier commutateur à semi-conducteurs (312) ont été désactivés ;

- activer le premier commutateur à semi-conducteurs (312) lorsque le premier commutateur mécanique (313) est dans un état non conducteur ; et

- activer le premier commutateur mécanique (313) lorsque le premier commutateur à semi-conducteurs (312) est dans un état conducteur ; et

- de plus, le système de commutation (300) comprenant en outre un circuit d'économie d'énergie (310) et un second commutateur à semi-conducteurs (311) connecté en série au circuit d'économie d'énergie (310) ;

- le circuit d'économie d'énergie (310), le premier commutateur à semi-conducteurs (312) et le premier commutateur mécanique (313) ayant la première borne commune connectée au second commutateur mécanique (314) ;

- le second commutateur à semi-conducteurs (311), le premier commutateur à semi-conducteurs (312) et le premier commutateur mécanique (313) ayant une seconde borne commune connectée à une sortie configurée pour être couplée à une pluralité d'unités d'alimentation électrique, PSU (325-331) ; et

- le circuit d'économie d'énergie (310) étant configuré pour fournir une alimentation auxiliaire aux PSU (325-331) lorsque le second commutateur à semi-conducteurs (311) est dans un état conducteur, de sorte que les PSU (325-331) sont capables de maintenir une tension de sortie dans une plage de tension spécifiée pendant un intervalle de temps prédéfini ($\Delta T_{new\_holdup}$).

2. Système de commutation (300) selon la revendication 1, les signaux de commande étant générés afin de générer une première séquence de commutation pour le premier commutateur à semi-conducteurs (312) et une seconde séquence de commutation pour le second commutateur à semi-conducteurs (311), ladite première séquence de commutation étant l'inverse de la seconde séquence de commutation.

3. Système de commutation (300) selon la revendication 1 ou 2, les signaux de commande étant générés afin de :

- désactiver le premier commutateur mécanique (313) lorsque le premier commutateur à semi-conducteurs (312) est dans un état conducteur ;

- désactiver le premier commutateur à semi-conducteurs (312) et activer le second commutateur à semi-conducteurs (311) en même temps, après que le premier commutateur mécanique (313) a été désactivé ;

- commuter le second commutateur mécanique (314) de l'entrée principale à l'entrée de secours ou de l'entrée de secours à l'entrée principale après que le premier commutateur mécanique (313) et le premier commutateur à semi-conducteurs (312) ont été désactivés ;

- désactiver le second commutateur à semi-conducteurs (311) et activer le premier commutateur à semi-conducteurs (312) en même temps, lorsque le premier commutateur mécanique (313) est dans un état non conducteur, et

- activer le premier commutateur mécanique (313), lorsque le premier commutateur à semi-conducteurs (312) est dans un état conducteur et que le second commutateur à semi-conducteurs (311) est dans un état non conducteur.

4. Équipement de technologie de l'information et de la communication, TIC (400) comprenant :

- une entrée principale ou une entrée de secours couplée respectivement à une source d'alimentation principale ou de secours ;

- un système de commutation (300) selon l'une quelconque des revendications 1 à 3, couplé à l'entrée principale ou à l'entrée de secours ;

- une pluralité d'unités d'alimentation électrique, PSU (325-331) couplées à une sortie du système de commutation (300) ; et

- une carte de service (340) couplée aux PSU (325-331), configurée pour traiter des services sur la base d'une tension de sortie fournie par les PSU (325-331).

5. Système comprenant :

un équipement de technologie de l'information et de la communication, TIC (400) comprenant :

- une entrée principale ou une entrée de secours couplée respectivement à une source d'alimentation principale ou de secours ;

- un système de commutation (300) selon l'une quelconque des revendications 1 à 3, couplé à l'entrée principale ou à l'entrée de secours ;

- une pluralité d'unités d'alimentation électrique, PSU (325-331) couplées à une sortie du système de commutation (300) ; et

- une carte de service (340) couplée aux PSU (325-331), configurée pour traiter des services sur la base d'une tension de sortie fournie par les PSU (325-331) ;

un système d'alimentation électrique principal (500) pour fournir la source d'énergie principale de l'équipement TIC (400), et

un système d'alimentation électrique de secours (600) pour fournir la source d'alimentation de secours de l'équipement TIC (400).

**6.** Procédé (700) destiné à commander un système de commutation (300) pour commuter entre une entrée principale et une entrée de secours, le système de commutation (300) comprenant un second commutateur mécanique (314) pouvant être connecté à l'entrée principale ou de secours, un premier commutateur à semi-conducteurs (312) et un premier commutateur mécanique (313) connectés en parallèle, une première borne commune de ceux-ci étant connectée au second commutateur mécanique (314), et le procédé (700) comprenant les étapes suivantes :

- la désactivation (701) du premier commutateur mécanique (313) à une tension nulle ; et
- la commutation (703) du second commutateur mécanique (314) de l'entrée principale à l'entrée de secours ou de l'entrée de secours à l'entrée principale à un courant nul, le second commutateur mécanique (314) étant commuté à l'entrée de secours ou à l'entrée principale alors que le premier commutateur mécanique (313) est désactivé ; les étapes de désactivation (701) du premier commutateur mécanique (313) à une tension nulle et de commutation (703) du second commutateur mécanique (314) de l'entrée principale à l'entrée de secours ou de l'entrée de secours à l'entrée principale à un courant nul, comprenant :
- la désactivation (701') du premier commutateur mécanique (313) lorsque le premier commutateur à semi-conducteurs (312) est dans un état conducteur ;
- la désactivation (702') du premier commutateur à semi-conducteurs (312) après que le premier commutateur mécanique (313) a été désactivé ; et
- la commutation (703') du second commutateur mécanique (314) de l'entrée principale à l'entrée de secours ou de l'entrée de secours à l'entrée principale après que le premier commutateur mécanique (313) et le premier commutateur à semi-conducteurs (312) ont été désactivés ;

le procédé (700) comprenant en outre les étapes suivantes :

- l'activation du premier commutateur à semi-conducteurs (312) lorsque le premier commutateur mécanique (313) est dans un état non conducteur ; et

- l'activation du premier commutateur mécanique (313) lorsque le premier commutateur à semi-conducteurs (312) est dans un état conducteur ;
- le système de commutation (300) comprenant en outre un circuit d'économie d'énergie (310) et un second commutateur à semi-conducteurs (311) connecté en série au circuit d'économie d'énergie (310),
- le circuit d'économie d'énergie (310), le premier commutateur à semi-conducteurs (312) et le premier commutateur mécanique (313) ayant la première borne commune connectée au second commutateur mécanique (314) ;
- le second commutateur à semi-conducteurs (311), le premier commutateur à semi-conducteurs (312) et le premier commutateur mécanique (313) ayant une seconde borne commune connectée à une sortie configurée pour être couplée à une pluralité d'unités d'alimentation électrique, PSU (325-331) ; et

le circuit d'économie d'énergie effectuant les étapes de fourniture d'une alimentation auxiliaire pour les PSU (325-331) lorsque le second commutateur à semi-conducteurs (311) est dans un état conducteur, de sorte que les PSU (325-331) sont capables de maintenir une tension de sortie dans une plage de tension spécifiée pendant un intervalle de temps prédéfini ($\Delta T_{new\_holdup}$).

**7.** Procédé (700) selon la revendication 6, les étapes de désactivation (701) du premier commutateur mécanique (313) à une tension nulle et de commutation (703) du second commutateur mécanique (314) de l'entrée principale à l'entrée de secours ou de l'entrée de secours à l'entrée principale à un courant nul, comprenant :

- la désactivation du premier commutateur mécanique (313) lorsque le premier commutateur à semi-conducteurs (312) est dans un état conducteur ;
- la désactivation du premier commutateur à semi-conducteurs (312) et l'activation du second commutateur à semi-conducteurs (311) en même temps, après que le premier commutateur mécanique (313) a été désactivé ; et
- la commutation du second commutateur mécanique (314) de l'entrée principale à l'entrée de secours ou de l'entrée de secours à l'entrée principale après que le premier commutateur mécanique (313) et le premier commutateur à semi-conducteurs (312) ont été désactivés ;

le procédé (700) comprenant en outre les étapes suivantes :

- la désactivation du second commutateur à semi-conducteurs (311) et l'activation du premier commutateur à semi-conducteurs (312) en même temps, lorsque le premier commutateur mécanique (313) est dans un état non conducteur, et

- l'activation du premier commutateur mécanique (313), lorsque le premier commutateur à semi-conducteurs (312) est dans un état conducteur et que le second commutateur à semi-conducteurs (311) est dans un état non conducteur.

Main
Input A

Backup
Input B

**Second
mechanical
switch
314**

T1

**first
semiconductor switch
312**

**first
mechanical switch
313**

T2

Output

**Controller
315**

300

Fig. 1

EP 3 340 429 B1

Fig. 2

Fig. 3

EP 3 340 429 B1

300

311

Semiconductor Q2

Output

310

312

313

315

Energy saving Circuit

Semiconductor Q1

Relay7

Controller

309

314

Output+

Output-

Input A+
Input B+
Input A-
Input B-

Fig. 4

Fig. 5a

Fig. 5b

Fig. 6a

EP 3 340 429 B1

Fig. 6b

400

Main input A    Backup input B

Switching arrangement 300

325 PSU 1

326 PSU 2          329 PSU n+1

327 PSU 3          330 PSU n+2

● ● ●              ● ● ●

328 PSU n          331 PSU n+m

Service board 340

Fig. 7

ICT
equipment
400

Main input A

Backup Input B

Main power
supply
system 500

Backup
power supply
system 600

Fig. 8

AC Utility 510

512 Generator    AC PDF 514

380Vac

PDF 518

Input A
Input B

ICT equipment
400

AC Utility 610

Generator 612    AC PDF 614

380Vac

HVDC
power
system
616a

Input B

618 PDF

Battery 617

Fig. 9

EP 3 340 429 B1

AC Utility 510

Generator 512 | AC PDF 514

380Vac

PDF 518

Input A
Input B

ICT equipment 400

510 AC Utility

Generator 612 | AC PDF 614

380V

AC UPS 616b

Battery 617

Input B

PDF 618

Fig. 10

EP 3 340 429 B1

ICT equipment 400

Input A
Input B

518 PDF

618 PDF

Input A

Input B

Power system 516
Battery 517

Power system 616
617 Battery

380Vac

380Vac

AC PDF 514

AC PDF 614

AC Utility 510
Generator 512

AC Utility 610
Generator 612

Fig. 11

700

701

switching off the first mechanical switch at Zero Voltage

703

switching the second mechanical switch from the main input to the backup input or from the backup input to the main input at zero current, wherein the second mechanical switch is switched to the backup input or the main input while the first mechanical switch is off

Fig. 12

EP 3 340 429 B1

switching off the first mechanical switch when the first semiconductor switch is in a conducting state

701'

switching off the first semiconductor switch after the first mechanical switch is switched off

702'

switching the second mechanical switch from the main input to the backup input or from the backup input to the main input after the first mechanical switch and the first semiconductor switch are switched off

703'

Fig. 13

EP 3 340 429 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013106190 A1
- US 5650974 A
- EP 2822145 A1